# EUROPEAN PATENT APPLICATION

(11) **EP 0 613 133 A2**
(43) Date of publication of application: **31.08.1994**
(21) Application number: 94200317.9
(22) Date of filing: 09.02.1994
(51) Int. Cl.: G11B 17/04, G11B 17/035, G11B 33/08

(54) **Arrangement comprising a scanning device and a loading device, and disc player comprising the arrangement**

(30) Priority: 16.02.1993 EP 93200419
(71) Applicant: Philips Electronics N.V., 5621 BA Eindhoven (NL)
(72) Inventor: Decoster, Michel Henri François, NL-5656 AA Eindhoven (NL)
(74) Representative: Schrijnemaekers, Hubert Joannes Maria

(57) **Abstract**

A disc player comprises an arrangement (21) producing minimal noise and comprising a scanning device (37) for optically scanning an information carrier, a frame (23) carrying a loading device comprising a drawer (7), and a sub-frame (25) which carries the scanning device and is movable between two positions relative to the frame. The sub-frame is adapted to cooperate with the drawer for moving the sub-frame from one position to the other position. For guiding the sub-frame from one position to the other position there are provided pivotal elements (24a-24d), having one side movably connected to the frame and having the other side movably connected to the sub-frame.

## Description

The invention relates to an arrangement for a disc player, in particular an optical or magneto-optical player, which arrangement comprises a scanning device for inscribing and/or reading an information carrier, which scanning device comprises a turntable, for supporting the information carrier, and a scanning unit with an objective, a frame carrying a loading device for the information carrier, which loading device comprises a drawer which is movable in a first direction and a second direction opposite to said first direction for moving the information carrier towards and away from the scanning device, a sub-frame which is supported by the frame and movable relative to the frame between a first position and a second position and which carries a the scanning device, the sub-frame being adapted to cooperate with the drawer for moving the sub-frame from one position to the other position, there being provided means for guiding the sub-frame from one position to the other position.

A disc player comprising such an arrangement is known from EP-A 0,397,262 (herewith incorporated by reference). The known disc player is intended for playing optical or magneto-optical discs and comprises a housing which accommodates an arrangement of the type defined in the opening paragraph. The arrangement has a frame carrying a loading device and sub-frame with a turntable. The loading device comprises a drawer which extends through a front opening in the housing and is movable between a slid-out position and a slid-in position. The scanning device, which is secured to the sub-frame in a resilient and damping manner, comprises a turntable and a scanning unit with an objective. A construction for guiding the sub-frame is arranged between the frame and the sub-frame. This guide construction has two guide elements which project laterally from the sub-frame and which bear on guide surfaces of the frame. During its movement from one position to the other position the drawer is temporarily in contact with the sub-frame in order to move the scanning device between a rest position and an operating position. The guide elements of the sub-frame then follow inclined portions of the guide surfaces of the frame. The construction has been dimensioned in such a manner that during the drawer movement the scanning device cannot come into contact with the drawer and an information carrier lying on the drawer, whereas in the operating position the turntable of the scanning device is disposed in such a plane that it can support an inserted information carrier.

It has been found that owing to the guide construction provided between the frame and the sub-frame the known arrangement produces comparatively much noise during movement of the slide. This is because the guide elements cooperating with the guide surfaces are susceptible to give rise to play both in vertical and in lateral directions, resulting in all kinds of undesirable noises during the movement of the sub-frame. Moreover, it has been found that the sub-frame returns to the rest position in an uncontrolled manner while the drawer is moved out of the housing, which gives rise to additional noise.

It is an object of the invention to improve an arrangement of the type defined in the opening paragraph in such a manner that no annoying noise is produced during the movement of the slide. To this end the arrangement in accordance with the invention is characterized in that the means for guiding the sub-frame, which carries the scanning device, from one position to the other position comprise pivotal elements which are each movably connected at one side to the frame and at another side to the sub-frame.
In the arrangement in accordance with the invention the sub-frame, which carries the scanning device, is coupled to the frame *via* the pivotal elements, so that the sub-frame and, consequently, the scanning device perform accurately defined movements during movement of the slide, which precludes undesired movements of the sub-frame. As a result, the arrangement in accordance with the invention has the advantage that a silent movement of the sub-frame carrying the scanning device is possible during the transfer of an information carrier to and its removal from the turntable.

An embodiment of the arrangement in accordance with the invention is characterized in that, viewed in the directions of movement of the drawer, at least one of the pivotal elements is situated at each of two opposite sides of the sub-frame.

For reasons of symmetry an embodiment of the arrangement in accordance with the invention is characterized in that the pivotal elements are arranged in pairs at opposite sides of the frame.

A practical embodiment of the arrangement in accordance with the invention is characterized in that the pivotal elements are connected to the frame and the sub-frame by means of hinges. The hinges may comprise, for example, rotatable or fixed pivots or they may be constructed as integral hinges.

A further noise reduction is possible by making the pivotal elements not longer than strictly necessary to guarantee a safe operation of the loading device. In this respect an embodiment of the arrangement in accordance with the invention is characterized in that pivotal elements which are situated after each other viewed in the directions of movement of the drawer have a different effective length and orientation. This step enables the first and second positions to be adjusted relative to one another in such a manner that only minimal displacements of the sub-frame with the scanning device carried by it are necessary.

An embodiment of the arrangement in accordance with the invention is characterized in that there are provided additional means for guiding the sub-frame from one position to the other position, which additional means comprise at least one pair of guide elements, of which a first element has a guide slot oriented substantially in the directions of movement of the drawer and a second element comprises a guide pin which is engageable in the guide slot, one of the elements being connected to the frame and the other element being connected to the sub-frame. In this embodiment said additional means prevent possible lateral excursions of the sub-frame as a result of possible lost motion in the connections, particularly the hinges, between the pivotal elements on the one hand and the frame and the sub-frame on the other hand. Therefore, this embodiment has the advantage that it prevents the formation of further sources of undesired noise. Preferably, there are provided two pairs of guide elements, one pair of guide elements being situated near a front side and one pair of guide elements being situated near a rear of the sub-frame viewed in the first direction of movement of the drawer. An optimum low-noise construction is obtained if a bounding edge of the guide pin and/or a bounding edge of the guide slot is provided with a damping material.

An embodiment of the arrangement in accordance with the invention is characterized in that the drawer comprises a first coupling element for cooperation with a second coupling element connected to the sub-frame, the coupling elements cooperating with one another in any intermediate position of the sub-frame situated between the first and the second position, and the coupling elements being firmly coupled to one another in the second position. An advantage of this embodiment is that the sub-frame movements are derived unambiguously from the drawer movements. Moreover, an important constructional advantage is that the sub-frame can assume an accurately defined second position without the sub-frame bearing against a stop on the frame. Owing to the coupling between the sub-frame and the drawer the last-mentioned position of the sub-frame merely requires an accurately defined position of the drawer.

A practical embodiment of the arrangement in accordance with the invention is characterized in that the first coupling element has an opening which is bounded by a coupling wall and the second coupling element is a projection adapted to cooperate with the coupling wall, the projection engaging the opening in the second position of the sub-frame. When the drawer moves in the first direction of movement the coupling wall engages with the projection of the sub-frame, which is in its first position. Conversely, if the drawer moves in the second direction the first coupling element is disengaged from the second coupling element in the first position of the sub-frame.

In order to guarantee silent drawer movements an embodiment of the arrangement in accordance with the invention is characterized in that the frame comprises a guide member which extends in the directions of movement of the drawer and which engages a guideway in the drawer, the guide member extending substantially over the entire frame viewed in the direction of movement of the drawer.

The invention further relates to a disc player comprising a housing and an arrangement in accordance with the invention.

The invention will now be described in more detail, by way of example, with reference to the drawings, in which
Fig. 1 is a perspective view of an optical disc player in accordance with the invention,
Fig. 2 is a perspective view of a part of an arrangement in accordance with the invention,
Fig. 3 is a diagrammatic longitudinal sectional view of the arrangement shown in Fig. 2, the drawer being shown in a slid-out position, and
Fig. 4 is view similar to that shown in Fig. 3 but now with the drawer the slid-in position.

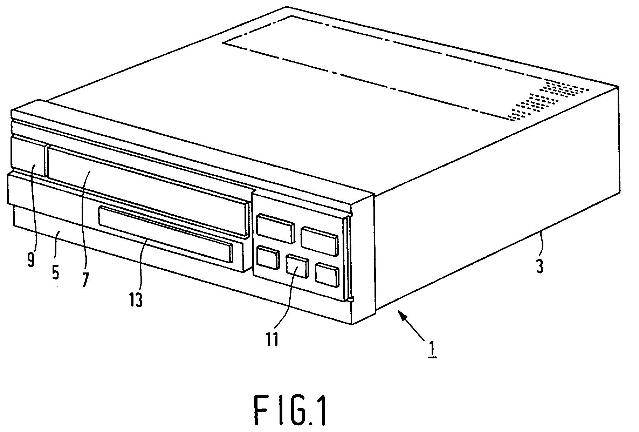

Depending on the provisions with which it is equipped the optical disc player shown in Fig.1 may be a player intended for optically scanning audio, data and/or video discs, such as CD, CDI, CDROM, CDV and VLP. The player, bearing the reference numeral 1, comprises a housing 3 having a front side 5 provided with a front opening in which a drawer 7 is arranged. Moreover, actuating keys 9, program keys 11 and a display 13 have been provided at the front side 5. The housing accommodates an arrangement in accordance with the invention, which arrangement comprises a loading device with a drawer and a scanning device for optically scanning an optical disc. The scanning device may be of a type as disclosed in United States Patent Specification 4,679,185 (PHN 11.356; herewith incorporated by reference), which scanning device comprises an objective arranged on a pivotal arm, or as disclosed in EP-A 0,329,234 (PHN 12.391; herewith incorporated by reference), which scanning device comprises an objective arranged on a slide.

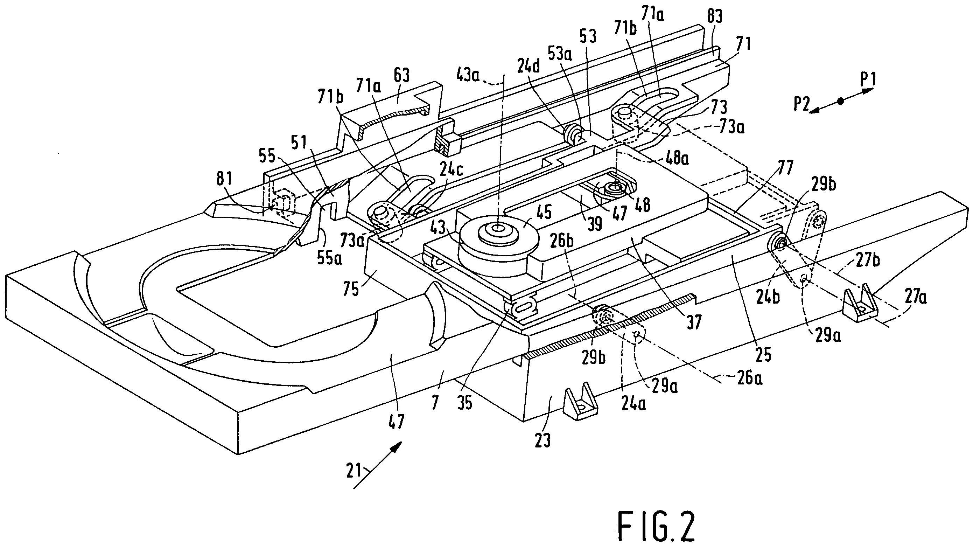

The arrangement bearing the reference numeral 21 in Figs. 2, 3 and 4 is suitable for use in a disc player of the type shown in Fig. 1. The arrangement 21 comprises a frame 23, a sub-frame 25 supported in the frame 23, and a drawer 7. The frame 23 can be fixedly mounted in the housing 3 of the disc player 1 shown in Fig. 1.

A scanning device 37 for optically scanning an optical disc is arranged in the rectangular sub-frame 25 by means of resilient and damping suspension elements 35. The scaning device 37 comprises a slide 39 carrying an optical scaning unit 47 and also comprises a turntable 43, which is rotatable about an axis of rotation 43a and has a supporting surface 45 for an optical disc. The scanning unit 47 has an objective 48, which is movable along its optical axis 48a.

The sub-frame is secured to the frame 23 by means of two pairs of pivotal elements 24a, 24b and 24c, 24d. The pivotal elements 24a and 24c are each pivotable relative to the frame 23 about an axis 26a and relative to the sub-frame 25 about an axis 26b, whereas the pivotal elements 24b and 24d are each pivotable relative to the frame 23 about an axis 27a and relative to the sub-frame 25 about an axis 27b. In the present example the frame 23 comprises trunnions 29a and the sub-frame comprises trunnions 29b for this purpose, the pivotal elements being pivotable about the trunnions which extend through and fit in the pivotal elements to form hinges with these elements.

The drawer 7 is supported in the frame 23 in a manner known *per se* and can perform a rectilinear movement as indicated by the arrow P1 in Fig. 2 to transfer an optical disc to the turntable 43. Moreover, the drawer 7 can perform a rectilinear movement as indicated by the arrow P2 to remove an optical disc from the turntable. The drawer 7 has a supporting surface 47 for supporting an optical disc.

The drawer 7 and the sub-frame 25 can be coupled to each other by means of a first coupling element 51, which is secured to the drawer 7, and a second coupling element 53, which is secured to the sub-frame 25 and is formed by a projection. The first coupling element has an opening 55 which is bounded by a coupling wall and in which the second coupling element 51 is engageable. The first coupling element and/or the second coupling element 53 may be provided with a damping material.

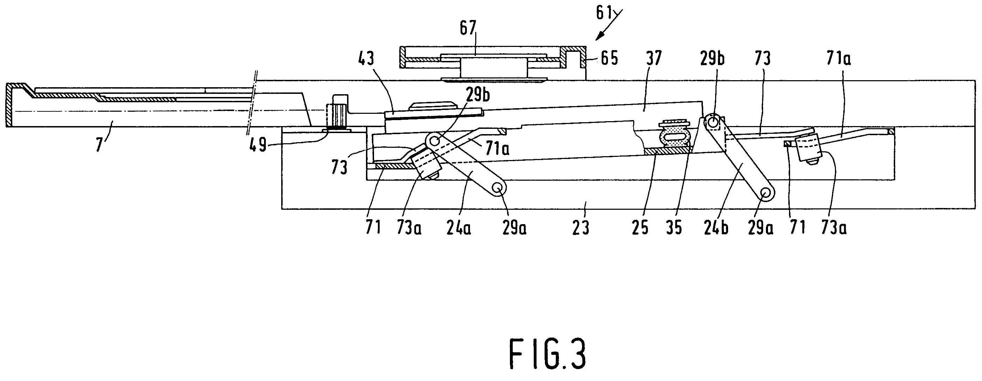

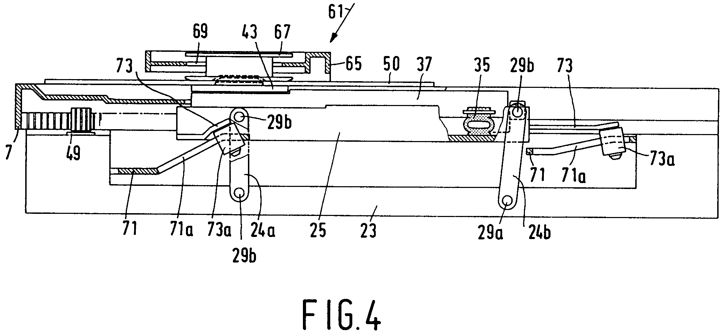

In the position illustrated in Figs. 2 and 3 the drawer 7 is in a slid-out position and an optical information carrier can be placed on the supporting surface 47. From the slid-out position the drawer can be moved into a slid-in position illustrated in Fig. 4 in the inward direction as indicated by the arrow P1 by means of an electric motor unit 49. If desired, the disc player may be constructed without the motor unit 49, the drawer then being operated by hand. At a given instant during the rectilinear inward movement the coupling element 51 of the drawer contacts a stop edge 53a of the coupling element 53 of the sub-frame 25, after which the sub-frame 25 is moved as the inward movement of the drawer 7 proceeds, the pivotal elements 24a to 24d performing pivotal movements which cause the sub-frame to perform both a movement in the direction indicated by the arrow P1 and a movement substantially parallel to the axis of rotation 43a of the turntable 43. The last-mentioned movement is performed between the first position of the sub-frame 25 shown in Figs. 2 and 3, hereinafter referred to as the loading position, and the second position shown in Fig. 4, which may also be referred to as the operating position. In the loading position of the sub-frame 25 the turntable 43 is situated in such an area that an information carrier lying on the moving drawer 7 passes the turntable 43 at some distance. After the drawer 7 has come into contact with the sub-frame 25 during the inward movement the scanning device 37 is moved as a result of the movement of the sub-frame 25. The mechanism is dimensioned in such a way that at the instant at which the drawer 7 has nearly reached its slid-in position the information carrier lying on the drawer 7 is disposed centrally or at least substantially centrally above the turntable 43. In the slid-in position of the drawer 7 the sub-frame 25 is exactly in the operating position, as shown in Fig. 4. In this position the turntable 43 has moved so far along its axis of rotation 43a that the information carrier 50, which has been moved inwards by means of the drawer 7, is situated on the supporting surface 45 of the turntable 43 and is disposed at some distance from the drawer 7. In the operating position of the sub-frame 25 the projection 53 of the sub-frame engages the opening 55 in the coupling element 51 and the information carrier on the turntable 43 can be scanned. Generally, a disc-pressure device is employed in order to guarantee that the information carrier remains on the turntable 43 during scanning.

Figs. 2, 3 and 4 show diagrammatically a suitable disc-pressure device. The disc-pressure device, bearing the reference numeral 61, comprises a member 63, arranged on the frame 23, with a holder 65 and a pressure means 67. The pressure means 67 projects through an opening 69 in the holder 65, and is movable to a limited extent in this opening. In the operating position of the sub-frame 25 the pressure means 67 urges the information carrier 50, which is situated on the turntable 43, against the supporting surface 45 of the turntable 43, the desired clamping force in the present example being provided by a magnetic attraction force produced by a first magnetic element arranged in the turntable 43 and a second magnetic pressure element arranged in the pressure means 67.

In order to remove an information carrier from the turntable 43 the drawer 7 is moved in the direction indicated by the arrow P2. As a result of the coupling between the drawer 7 and the sub-frame 25 the sub-frame is initially moved until the coupling element formed by the projection 53 has left the opening 55 in the coupling element 51. In this situation the pivotal elements 24a to 24d are again in the position shown in Figs. 2 and 3 and the sub-frame is consequently again in the loading position.

In order to limit the movements to be performed by sub-frame 25 the pivotal elements 24a and 24c used in the arrangement in accordance with the invention have a shorter effective length, measured between the axes 26a and 26b, than that the pivotal elements 24b and 24d, measured between the axes 27a and 27b, and for the same reason they do not extend parallel to the pivotal elements 24b and 24d.

In order to achieve that the movements of the sub-frame 25 are defined as accurately as possible the arrangement in accordance with the invention comprises an additional guide construction formed by two pairs of guide elements. Each pair comprises a first element 71, which is secured to the frame 23 and has a guide slot 71a oriented mainly in the directions P1 and P2, and a second element 73, which is secured to the sub-frame and which comprises a guide pin 73a which fits in the guide slot 71. The guide pin 73a extends substantially parallel to the axis of rotation 43a of the turntable 43. One pair is situated near a front side 75 and the other pair is situated near a rear side 77 of the sub-frame. The edges 71b bounding the pins 73a and/or the slots 71a are provided with a damping or sound-absorbing material, for example a suitable synthetic material, such as a polyurethane.

In order to guarantee smooth and silent movements of the drawer 7 the drawer has a guideway 81 which extends in the directions P1, P2 and the frame 23 has a guide member 83 which engages the guideway 81 and which extends over at least the greater part of the depth of the frame 23, viewed in the direction indicated by the arrow P1.

## Claims

1. An arrangement for a disc player, in particular an optical or magneto-optical player, which arrangement comprises
- a scanning device for inscribing and/or reading an information carrier, which scanning device comprises a turntable, for supporting the information carrier, and a scanning unit with an objective,
- a frame carrying a loading device for the information carrier, which loading device comprises a drawer which is movable in a first direction and a second direction opposite to said first direction for moving the information carrier towards and away from the scanning device,
- a sub-frame which is supported by the frame and movable relative to the frame between a first position and a second position and which carries a the scanning device,
the sub-frame being adapted to cooperate with the drawer for moving the sub-frame from one position to the other position, there being provided means for guiding the sub-frame from one position to the other position,
characterized in that
the means for guiding the sub-frame, which carries the scanning device, from one position to the other position comprise pivotal elements which are each movably connected at one side to the frame and at another side to the sub-frame.

2. An arrangement as claimed in Claim 1, characterized in that, viewed in the directions of movement of the drawer, at least one of the pivotal elements is situated at each of two opposite sides of the sub-frame.

3. An arrangement as claimed in Claim 1 or 2, characterized in that the pivotal elements are arranged in pairs at opposite sides of the frame.

4. An arrangement as claimed in Claim 1, 2 or 3, characterized in that the pivotal elements are connected to the frame and the sub-frame by means of hinges.

5. An arrangement as claimed in Claim 2 or 3, characterized in that pivotal elements which are situated after each other viewed in the directions of movement of the drawer have a different effective length and orientation.

6. An arrangement as claimed in Claim 1, 2, 3, 4 or 5, characterized in that there are provided additional means for guiding the sub-frame from one position to the other position, which additional means comprise at least one pair of guide elements, of which a first element has a guide slot oriented substantially in the directions of movement of the drawer and a second element comprises a guide pin which is engageable in the guide slot, one of the elements being connected to the frame and the other element being connected to the sub-frame.

7. An arrangement as claimed in Claim 6, characterized in that there are provided two pairs of guide elements, one pair of guide elements being situated near a front side and one pair of guide elements being situated near a rear of the sub-frame viewed in the first direction of movement of the drawer.

8. An arrangement as claimed in Claim 6 or 7, characterized in that a bounding edge of the guide pin and/or a bounding edge of the guide slot is provided with a damping material.

9. An arrangement as claimed in any one of the preceding Claims, characterized in that the drawer comprises a first coupling element for cooperation with a second coupling element connected to the sub-frame, the coupling elements cooperating with one another in any intermediate position of the sub-frame situated between the first and the second position, and the coupling elements being firmly coupled to one another in the second position.

10. An arrangement as claimed in Claim 9, characterized in that the first coupling element has an opening which is bounded by a coupling wall and the second coupling element is a projection adapted to cooperate with the coupling wall, the projection engaging the opening in the second position of the sub-frame.

11. An arrangement as claimed in any one of the preceding Claims, characterized in that the frame comprises a guide member which extends in the directions of movement of the drawer and which engages a guideway in the drawer, the guide member extending substantially over the entire frame viewed in the direction of movement of the drawer.

12. A disc player comprising a housing and an arrangement as claimed in any one of the preceding Claims.
